## Europäisches Patentamt
## European Patent Office
## Office européen des brevets

(19)

(11) Veröffentlichungsnummer: **0 172 588**
**B1**

(12) ## EUROPÄISCHE PATENTSCHRIFT

(45) Veröffentlichungstag der Patentschrifft:
**17.01.90**

(51) Int. Cl. ⁴: **B 01 D 53/34**

(21) Anmeldenummer: **85200990.1**

(22) Anmeldetag: **21.06.85**

(54) Verfahren zur Abtrennung von NOx und SO2 aus Rauchgasen.

(30) Priorität: **09.08.84 DE 3429332**

(43) Veröffentlichungstag der Anmeldung:
**26.02.86 Patentblatt 86/09**

(45) Bekanntmachung des Hinweises auf die Patenterteilung:
**17.01.90 Patentblatt 90/03**

(84) Bennante Vertragsstaaten:
**AT DE FR GB IT NL**

(56) Entgegenhaltungen:
**EP-A-0 105 547**
**DE-A-2 341 241**
**DE-B-3 322 159**

(73) Patentinhaber: **METALLGESELLSCHAFT AG**
**Reuterweg 14 Postfach 3724**
**D-6000 Frankfurt/M.1 (DE)**

(72) Erfinder: **Graf, Rolf, Dr.**
**Am Felsenkeller 43**
**D-6382 Friedrichsdorf (DE)**
Erfinder: **Schröter, Michael, Dr.**
**Lindenstrasse 32**
**D-6000 Frankfurt am Main (DE)**
Erfinder: **Reh, Lothar, Dr.**
**Stettiner Stasse 3**
**D-6000 Frankfurt am Main 60 (DE)**
Erfinder: **Rinn, Gerhard, Dr.**
**Am Breitwiesenberg 23**
**D-6100 Darmstadt (DE)**

(74) Vertreter: **Rieger, Harald, Dr.**
**Reuterweg 14**
**D-6000 Frankfurt am Main (DE)**

LIBERGRAF, STOCKHOLM 1990

EP 0 172 588 B1

2

**Beschreibung**

Die Erfindung bezieht sich auf ein Verfahren zur simultanen Abtrennung von $NO_x$ und $SO_2$ aus Rauchgasen mit Hilfe von Feststoffen in einer aus Wirbelschichtreaktor, Abscheider und Rückführleitung gebildeten zirkulierenden Wirbelschicht, wobei das Rauchgas als Fluidisierungsgas benutzt wird und die Wirbelschicht aus Feststoffen zweier unterschiedlicher Körnungsbereiche und wenigstens zweier unterschiedlicher Arten besteht.

Während die Rauchgas-Entstaubung schon seit vielen Jahren durchgeführt wird, hat die Abscheidung gasförmiger Schadstoffe aus Rauchgasen wegen der verschärften Umweltschutzbestimmungen erst in jüngerer Zeit Bedeutung gewonnen. Die bisher hierzu bekanntgewordenen Vorschläge weisen allerdings noch erhebliche Nachteile auf.

So ist beispielsweise aus der DE-A-2 341 241 ein Verfahren zur gleichzeitigen Entfernung von Stickoxiden und Schwefeloxiden aus einem Gasstrom bekanntgeworden, bei dem Ammoniak zugegeben und der Gasstrom mit einer festen Kontaktmasse behandelt wird. Da das Verfahren ein Regenerieren der Kontaktmasse erfordert, kann es nur bedingt als "kontinuierlich" bezeichnet werden. Es ist für staubhaltige Gase nicht geeignet, weil die poröse Kontaktmasse verstopft und damit inaktiv wird. Eine vorherige Entstaubung ist zwar grundsätzlich möglich, sie würde das Verfahren aber erheblich verteuern und seine Wettbewerbsfähigkeit einschränken.

Nach einem anderen Vorschlag (DE-A-2 645 874) sollen Abgase bei 100 bis 400°C mit einem bei 250 bis 450°C regenerierbaren Absorptionsmittel im Wirbelschichtverfahren entschwefelt und dabei reiner Schwefel gewonnen werden. Das Verfahren soll auch für die Entfernung von $NO_x$ durch Absorption geeignet sein. In diesem Fall muß allerdings ein verhältnismäßig teures Absorptionsmittel benutzt werden, was zwangsläufig eine Regeneration erfordert. Der Hauptnachteil des Verfahrens besteht aber darin, daß bei einer gleichzeitigen Abscheidung von $NO_x$ die abgeschiedenen schwefelhaltigen Absorptionsmittel durch $NO_x$ bzw. Stickstoffverbindungen verunreinigt sind, so daß kein reiner Schwefel produziert und das Produkt auch nicht problemlos deponiert werden kann.

Bei einem anderen bekanntgewordenen Verfahren (DE-A-2 705 434) sollen $NO_x$ und $SO_x$ mittels eines kupferhaltigen Absorptionsmittels aus einem Gasstrom abgetrennt werden, der allerdings freien Sauerstoff enthalten muß, weil das kupferhaltige Absorptionsmittel zunächst oxidiert werden muß, um $SO_x$ binden zu können. Dieses Verfahren ist für die Reinigung von Kraftwerksabgasen schon deswegen nicht geeignet, weil man dort auf möglichst vollständige Verbrennung mit geringstmöglichen Luftüberschuß achtet, so daß normalerweise der bei diesem Verfahren benötigte freie Sauerstoff nicht mit Sicherheit zur Verfügung steht. Außerdem besteht auch hier wieder das Problem, daß regenerativ gearbeitet werden muß und die aus dem Gasstrom abgeschiedenen Stoffe nur auf teuren Sonderdeponien endgelagert werden können.

Die gleichen Nachteile weisen die Abscheideverfahren auf, die aus der DE-B-2 705 901, aus der EP-A-0 024 061 sowie aus der DE-C-2 939 783 bekanntgeworden sind.

Bei einem weiteren Vorschlag (DE-A-2 726 892) sollen in einer Kontaktstrecke, vorzugsweise in einem Wirbelbett mit Katalysatormasse bei 300 bis 550°C $SO_2$ in $SO_3$ und $NO_x$ in gut absorbierbare Verbindungen umgewandelt und gemeinsam hinter einer Kalkkontaktstrecke aus dem Rauchgas abgetrennt werden. Die Umwandlungsprodukte des $NO_x$ werden mit den schwefelhaltigen Absorptionsmitteln abgeschieden, die dadurch unbrauchbar, zumindest aber in ihrer Qualität und Verwertbarkeit beeinträchtigt werden und ebenfalls ein Deponieproblem darstellen.

Schließlich ist aus der DE-A-3 235 558 ein Verfahren zur Abtrennung von Schadstoffen aus Abgasen mit Hilfe von Feststoffen in einer aus Wirbelschichtreaktor, Abscheider und Rückführleitung gebildeten zirkulierenden Wirbelschicht vorgeschlagen worden, wobei man das Abgas als Fluidisierungsgas in einer aus zwei Feststoffen unterschiedlicher Körnung gebildete Wirbelschicht einleitet. Dabei dient der feinere Feststoff als Absorptionsmittel für die Schadstoffe, während der gröbere Feststoff sich bezüglich der Schadstoffabscheidung chemisch neutral verhält und insbesondere zur Aufrechterhaltung bestimmter Bedingungen in der Wirbelschicht eingesetzt wird. Es wurde dabei festgestellt, daß die Verweilzeit des feinkörnigen Feststoffes, der sonst - ähnlich wie bei einer pneumatischen Förderung - unverzüglich mit entsprechend schlechteren Bedingungen hinsichtlich Wärme- und Stoffübertragung ausgetragen würde, innerhalb des Wirbelschichtreaktors beträchtlich erhöht wird. Darüber hinaus ist aufgrund des vergleichsweise groben Kornspektrums eine große Relativbewegung zwischen Grob- und Feinkorn zu erreichen.

Der Erfindung liegt die Aufgabe zugrunde, ausgehend von dem zuletzt genannten Verfahren, eine Möglichkeit zu schaffen, bei der simultan Schadstoffe, insbesondere $NO_x$ und $SO_2$, aus Rauchgasen abgetrennt werden können, ohne daß die beim Stand der Technik festgestellten Nachteile auftreten. Insbesondere soll das Verfahren für preiswerte Reaktionsmittel, einen weiten Temperaturbereich und ohne daß Deponieprobleme auftreten anwendbar sein.

Zur Lösung dieser Aufgabe wird vorgeschlagen, daß bei einem Verfahren der eingangs beschriebenen Art in den Rauchgasstrom Ammoniak oder Ammoniak enthaltende oder bildende Stoffe eingebracht und die Rauchgase bei einer Temperatur von 160 bis 500°C behandelt werden und daß der gröbere Feststoff aus den $NO_x$-Abbau katalytisch fördernden Materialien mit einer Körnung von $d_p$ 50 von 50 bis 1000 μm und der feinere Feststoff aus $SO_x$-sorbierenden Mate-

2

rialien mit einer Körnung von $d_p$ 50 unterhalb 20 µm besteht.

Abgesehen von den bekannten und technisch schon in verschiedener Weise ausgenutzten Vorteilen bei der Anwendung einer zirkulierenden Wirbelschicht ist das vorgeschlagene Verfahren vor allem deswegen vorteilhaft, weil eine Verunreinigung der schwefelhaltigen Abscheideprodukte mit stickstoffhaltigen Verbindungen nahezu vollständig vermieden werden kann. Die Abtrennung der Schadstoffe erfolgt zwar am gleichen Ort und zur gleichen Zeit (= simultan), im Hinblick auf die chemische Zusammensetzung der in der Wirbelschicht vorhandenen Feststoffe aber bereits selektiv.

Im Unterschied zu dem aus der DE-A-3 235 558 bekanntgewordenen Verfahren werden bei diesem Verfahren für die gröberen Feststoffe vorzugsweise abriebfeste Materialien verwendet, damit die selektive Abtrennung der Partikel aus dem Gasstrom infolge Veränderung des Korngrößenspektrums nicht unnötig erschwert wird.

Vorteilhafte Ausgestaltungen des erfindungsgemäßen Verfahrens sind in den Unteransprüchen 2 bis 16 beschrieben. Das Verfahren kann außerdem durch eine oxidative und thermische Reaktivierung des Sorptionsmittels für die Schwefeloxide gemäß deutscher Patentanmeldung P-3 322 159 und eine geeignete Aufbereitung und Aktivierung der den $NO_x$-Abbau katalytisch fördernden Materialien ergänzt werden (Ansprüche 17 bis 20). Danach wird aus der zirkulierenden Wirbelschicht ein Teilstrom des beladenen Sorptionsmittels abgezweigt und bei einer Temperatur von 600 bis 1200°C einer oxidierenden Behandlung unterworfen, der überwiegende Teil des oxidierend behandelten Sorptionsmittels wird in die zirkulierende Wirbelschicht zurückgeführt und der restliche, vornehmlich aus Kalziumsulfat bestehende Teilstrom wird ausgeschleust sowie der ausgeschleuste Teilstrom durch frisches Sorptionsmittel, insbesondere Kalkstein, ersetzt.

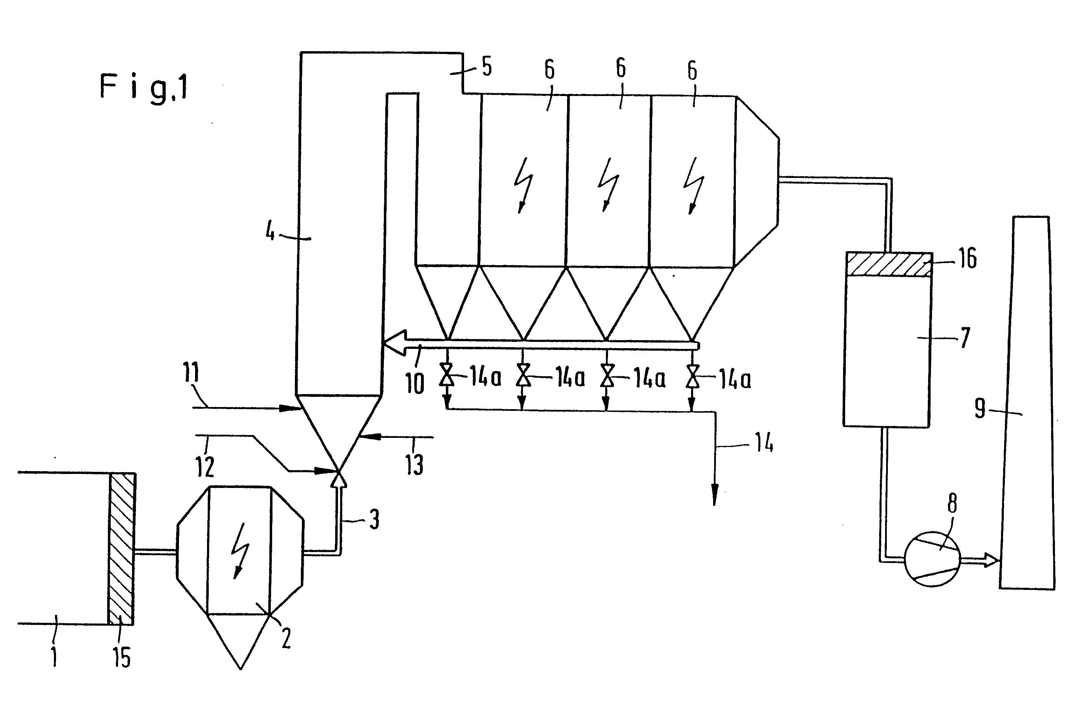

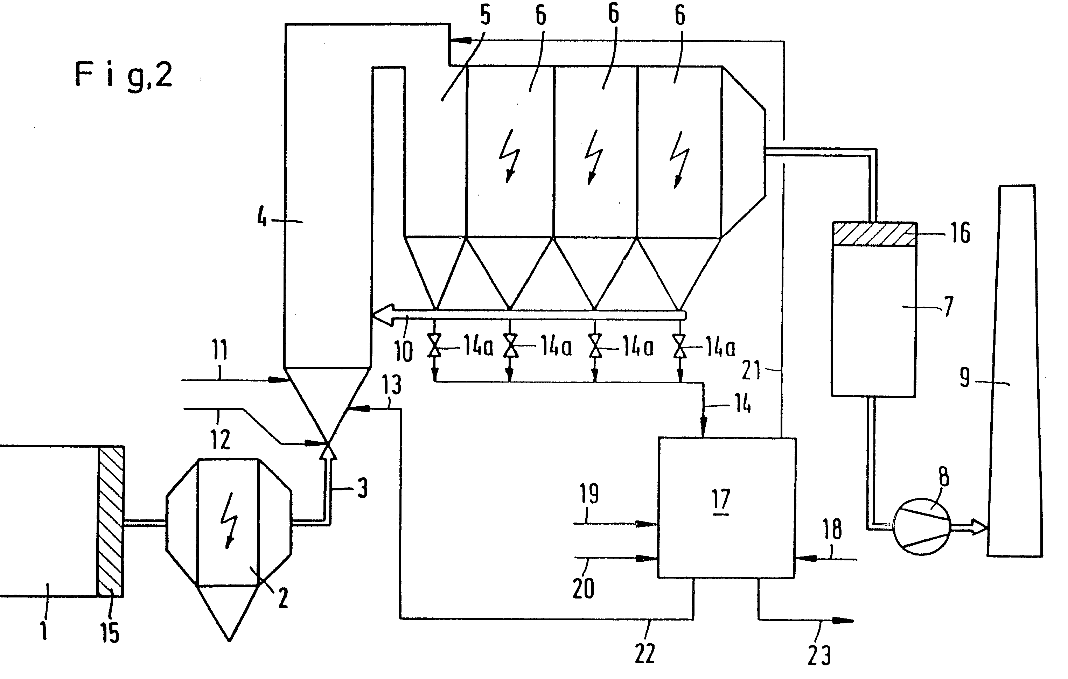

Weitere Einzelheiten und Vorteile des Verfahrens werden anhand der Figuren 1 und 2 sowie der Beispiele näher erläutert.

In Figur 1 ist stark vereinfacht das Schema einer Anlage zur Ausführung des Verfahrens dargestellt.
Figur 2 zeigt eine Anlage gemäß Figur 1, jedoch ergänzt durch eine Anlage zur oxidativen Reaktivierung des Sorptionsmittels.

Die im Kessel 1 eines Kraftwerks anfallenden Rauchgase werden in einem elektrostatischen Staubabscheider 2 im wesentlichen staubfrei gemacht, bevor sie über Rohrleitung 3 als Fluidisierungsgas in den Wirbelschichtreaktor 4 eingebracht werden. Dieser Wirbelschichtreaktor 4 bildet zusammen mit dem elektrostatischen Abscheider, bestehend aus Vorabscheider 5 und Hauptabscheider 6, sowie der Rückführleitung 10 eine zirkulierende Wirbelschicht. Die Wirbelschicht besteht erfindungsgemäß aus einer gröberen Feststofffraktion mit einer Körnung von

$d_p$ 50 von 50 bis 1000 µm, die den $NO_x$-Abbau katalytisch fördert, und einer zweiten feineren Feststofffraktion mit einer Körnung von $d_p$ 50 unterhalb 20 µm aus $SO_x$-sorbierenden Materialien. Die erste gröbere Feststofffraktion verbleibt im wesentlichen im Wirbelschichtreaktor 4, während die feinere Fraktion mit dem Rauchgas nahezu vollständig aus dem Wirbelschichtreaktor ausgetragen wird. Soweit Teile der gröberen Fraktion ausgetragen werden, erfolgt ihre Abtrennung aus dem Rauchgasstrom bereits im Vorabscheider 5, von wo sie auf kürzestem Weg in den Wirbelschichtreaktor 4 zurückgeführt werden. Eine Verschleppung von den $NO_x$-Abbau katalytisch fördernden Materialien in den Hauptabscheider 6 und schließlich in die Austragsleitung 14 für die schwefelhaltigen Sorptionsmittel wird weitestgehend verhindert, so daß eine Verunreinigung der schwefelhaltigen Reststoffe vermieden und letztere entweder weiter verarbeitet oder aber problemlos endgelagert werden können. Über die in der Austragsleitung 14 vorgesehenen Ventile 14a ist außerdem eine Regelung des Abzugs bzw. der Rückführung der Stoffströme aus den einzelnen Bunkern möglich.

Die den $NO_x$-Abbau katalytisch fördernden Materialien werden dem Wirbelschichtreaktor 4 über die Leitung 11 zugeführt; Ammoniak oder Ammoniak enthaltende oder bildende Stoffe über die Leitung 12 und schließlich $SO_x$-sorbierende Materialien über die Leitung 13.

Der von den Schadstoffen befreite Rauchgasstrom wird in bekannter Weise mittels Saugzug 8 aus dem elektrostatischen Abscheider 5, 6 abgezogen und nach Durchströmen des Luvos 7 in den Kamin 9 abgegeben.

Mit 15 und 16 sind zwei schraffierte Heizflächen angedeutet, die bei der Auslegung einer Anlage je nach gewünschtem Temperaturniveau für die Schadstoffabtrennung wahlweise am Ende des Kessels oder am Anfang des Luvos angeordnet werden können. Legt man das erfindungsgemäße Verfahren für den unteren Temperaturbereich aus, so muß die Heizfläche bei 15 angeordnet werden, soll das Verfahren im oberen Temperaturbereich arbeiten, ist die Heizfläche bei 16 vorzusehen.

Soweit infolge der Schadstoffabtrennung der Taupunkt erniedrigt wird, kann die fühlbare Wärme des Rauchgasstroms selbstverständlich bis zu entsprechend niedrigeren Temperaturen ausgenutzt werden, was bei der Auslegung der dem erfindungsgemäßen Verfahren nachgeschalteten Heizflächen berücksichtigt werden kann.

Mit einer Anlage gemäß Figur 1 war das Rauchgas einer Braunkohlefeuerung (1) zu reinigen, und zwar in einer Menge von 500.000 m³/h mit 20 Feuchte. Das Rauchgas enthielt

800 mg/m³[*]   NO
4.000 mg/m³[*]   $SO_2$ und
10.000 mg/m³[*]   Flugstaub

([*] = Alle Angaben bezogen auf Normzustand, trocken).

Der eingesetzte Wirbelschichtreaktor (4) für die simultane $NO_x$ und $SO_2$-Entfernung hatte im zylindrischen Bereich einen Durchmesser von 9,5 m und eine Höhe von 25 m.

Das Rauchgas, das zuvor in einem einfeldrigen elektrostatischen Staubabscheider (2) vom Staub im wesentlichen befreit worden war wurde über Rohrleitung (3) dem Wirbelschichtreaktor (4) zugeführt. Über die Leitung (11) wurde das den $NO_x$-Abbau katalytisch fördernde Material mit einer mittleren Teilchengröße von 100 µm und über die Leitung (13) Kalziumhydroxid mit einer mittleren Teilchengröße von 5 µm zudosiert. Die Einführung von Ammoniak erfolgt über die Leitung (12) in den Unterteil des Wirbelschichtreaktors (4).

Die Gasgeschwindigkeit im Wirbelschichtreaktor (4) betrug 6 m/s ($\approx$ Leerrohrgeschwindigkeit), die mittlere Suspensionsdichte ca. 0,5 $kg/m^3$, die Mischtemperatur von Rauchgas und den in der zirkulierenden Wirbelschicht befindlichen Feststoffen 370°C. Die am Kopf des Wirbelschichtreaktors (4) austretende Feststoff-Gas-Suspension, die eine Suspensionsdichte von 400 $g/m^3$ (Normzustand) besaß, gelangte dann in den Vorabscheider (5) und schließlich in den dreifeldrigen Hauptabscheider (6). In den Staubbunkern fielen stündlich 205 t Feststoff an, die zum überwiegenden Teil über die Rückführleitung (10) in den unteren Bereich des Wirbelschichtreaktors (4) zurückgeführt wurden.

Der Feststoffaustrag erfolgte über die Austragsleitung (14) aus der in Strömungsrichtung gesehen letzten Hälfte des Abscheiders. Der Reststoff bestand im wesentlichen aus einem Gemisch von Kalziumsulfat, Kalziumsulfit, Kalziumkarbonat sowie nicht umgesetztem Kalziumhydroxid.

Die in geringem Anteil mit dem Rauchgasstrom in den Abscheidern (5, 6) ausgetragenen, den $NO_x$-Abbau katalytisch fördernden Materialien wurden nahezu vollständig im Vorabscheider (5) und im ersten Feld des Hauptabscheiders (6) abgeschieden und in den Wirbelschichtreaktor (4) zurückgeführt.

An frischen Reaktionsmitteln wurden der zirkulierenden Wirbelschicht stündlich 3.500 kg Kalziumhydroxid und 150 kg Ammoniak zugeführt. Aus der Austragsleitung (14) wurden stündlich 5.500 kg schwefelhaltige Sorptionsmittel ausgetragen.

Nach der Schadstoffabtrennung wurde das Rauchgas mit 360°C dem Luvo (7) zugeführt. Es enthielt, auf den Normzustand bezogen:

| 160 | $mg/m^3$ | NO, |
| 360 | $mg/m^3$ | $SO_2$ und |
| 50 | $mg/m^3$ | Flugstaub |

Unter Anwendung des erfindungsgemäßen Verfahrens sind dennach aus dem Rauchgasstrom bezogen auf den Ausgangszustand 80 % NO, 91 % $SO_2$ und 99,5 % Flugstaub abgetrennt worden.

In Figur 2 ist die Anlage gemäß Figur 1, ergänzt durch eine Anlage 17 zur oxidativen Reaktivierung des Sorptionsmittels dargestellt. Ober die Austragsleitung 14 werden die schwefelhaltigen Sorptionsmittel in die Reaktivierungsanlage 17 eingeführt. Über die Leitungen 19 und 20 erhält die Anlage die notwendigen Mengen an Brennstoff und Luft. Ober die Leitung 18 wird Kalkstein ($CaCO_3$) eingeführt. Die Rückführung der $SO_x$-sorbierenden Materialien, überwiegend CaO mit geringen Anteilen $CaSO_4$, erfolgt über die Leitungen 22 und 13 in den Wirbelschichtreaktor 4. Als Endprodukt wird aus der Anlage 17 schließlich $CaSO_4$ mit geringen Anteilen CaO über die Leitung 23 abgeführt. Über die Leitung 21 werden die Abgase der Anlage 17 vor dem Vorabscheider 5 in den Rauchgasstrom eingegeben.

Ausgehend von den im Beispiel 1 genannten Daten wurde mit einer Anlage gemäß Figur 2 $SO_2$ und $NO_x$ aus dem Rauchgasstrom entfernt. Die ergänzend vorgesehene Aktivierungs- und Oxidationsstufe erlaubt eine nahezu stöchiometrische Ausnutzung des eingesetzten Kalksteins und führt zu einem Endprodukt, das im wesentlichen aus $CaSO_4$ mit geringem Anteil an CaO besteht.

An Reaktionsmitteln wurden 3.125 kg/h Kalziumkarbonat in die Aktivierungs- und Oxidationsstufe sowie 150 kg/h Ammoniak in den Wirbelschichtreaktor 4 eingeführt. Über die Austragsleitung 14 wurden 6 t/h Reststoff in die Aktivierungs- und Oxidationsstufe gefördert. Als aktivierter Kalk wurden 3,5 t/h über die Leitung 22 und 13 in den Wirbelschichtreaktor zurückgeführt. An Reststoff wurden über die Leitung 23 3.825 kg/h $CaSO_4$ und 175 kg/h CaO aus der Anlage 17 ausgetragen.

An den Rauchgasdaten hat sich durch die Anwendung der Aktivierungs- und Oxidationsstufen nichts geändert. D.h., der Rauchgasstrom wurde nach wie vor mit 360°C dem Luvo zugeführt und enthielt 160 $mg/m^3$ NO, 360 $mg/m^3$ $SO_2$ und 50 $mg/m^3$ Flugstaub.

Für die in Anspruch 16 erwähnten Formeln gelten folgende Definitionen:

| u | die relative Gasgeschwindigkeit in m/s |
| Ar | die Archimedeszahl |
| $F_r$ | die Froude-Zahl |
| $\rho g$ | die Dichte des Gases in kg/m |
| $\rho k$ | die Dichte des Feststoffteilchens in $kg/m^3$ |
| $d_k$ | den Durchmesser des kugelförmigen Teilchens in m |
| v | die kinematische Zähigkeit in $m^2/s$ |
| g | die Gravitationskonstante in $m/s^2$ |

$$Ar = \frac{d_k^3 \cdot g \, (\rho k - \rho g)}{\rho g \cdot v^2}$$

$$Fr^2 = \frac{u^2}{g \cdot d_k}$$

## Patentansprüche

1. Verfahren zur simultanen Abtrennung von $NO_x$ und $SO_2$ aus Rauchgasen mit Hilfe von Feststoffen in einer aus Wirbelschichtreaktor, Abscheider und Rückführleitung gebildeten zirkulierenden Wirbelschicht, wobei das Rauchgas als Fluidisierungsgas benutzt wird und die Wirbelschicht aus Feststoffen zweier unterschiedlicher Körnungsbereiche und wenigstens zweier unterschiedlicher Arten besteht, dadurch gekennzeichnet, daß in den Rauchgasstrom Ammoniak oder Ammoniak enthaltende oder bildende Stoffe eingebracht und die Rauchgase bei einer Temperatur von 160 bis 500°C behandelt werden und daß der gröbere Feststoff aus den $NO_x$-Abbau katalytisch fördernden Materialien mit einer Körnung von $d_p$ 50 von 50 bis 1000 µm und der feinere Feststoff aus $SO_x$-sorbierenden Materialien mit einer Körnung von $d_p$ 50 unterhalb 20 µm besteht.

2. Verfahren nach Anspruch 1, dadurch gekennzeichnet, daß außerdem Radikalbildner wie Peroxide, und/oder Mittel zur Aktivierung der katalytisch wirkenden Materialien in den Rauchgasstrom eingebracht werden.

3. Verfahren nach einem der Ansprüche 1 oder 2, dadurch gekennzeichnet, daß die Rauchgase bei einer Temperatur von 250 bis 500°C behandelt werden.

4. Verfahren nach einem der Ansprüche 1 bis 3, dadurch gekennzeichnet, daß dem Rauchgasstrom die nach der Schadstoffabtrennung noch vorhandene nutzbare Wärme mittels Wärmetauschern entzogen wird.

5. Verfahren nach Anspruch 4, dadurch gekennzeichnet, daß der Rauchgasstrom dabei um etwa die gleiche Temperaturdifferenz weiter abgekühlt wird, wie der Taupunkt infolge Schadstoffabtrennung erniedrigt worden ist.

6. Verfahren nach einem der Ansprüche 1 bis 5, dadurch gekennzeichnet, daß der gröbere Feststoff eine Körnung von $d_p$ 50 von 100 bis 500 µm aufweist.

7. Verfahren nach einem der Ansprüche 1 bis 6, dadurch gekennzeichnet, daß der gröbere Feststoff aus Übergangsmetallen der IV- bis VIII-Gruppe des Periodensystems der Elemente oder deren Oxiden besteht.

8. Verfahren nach Anspruch 7, dadurch gekennzeichnet, daß der gröbere Feststoffe aus einem Metall der Gruppe Ti, V oder Fe oder deren Oxiden besteht.

9. Verfahren nach einem der Ansprüche 1 bis 6, dadurch gekennzeichnet, daß der gröbere Feststoff aus Cu oder dessen Oxiden besteht.

10. Verfahren nach einem der Ansprüche 1 bis 9, dadurch gekennzeichnet, daß der feinere Feststoff aus Erdalkalioxid, -hydroxid oder -carbonat, insbesondere aus $Ca(OH)_2$, besteht.

11. Verfahren nach einem der Ansprüche 1 bis 10, dadurch gekennzeichnet, daß als gröbere und/oder feinere Feststoffe Abfall- oder Nebenprodukte eingesetzt werden.

12. Verfahren nach einem der Ansprüche 1 bis 11, dadurch gekennzeichnet, daß man für die gröberen Feststoffe vorzugsweise abriebfeste Materialien verwendet.

13. Verfahren nach einem der Ansprüche 1 bis 12, dadurch gekennzeichnet, daß man in der Wirbelschicht den Anteil an grobem Feststoff auf über 50 Gew.-% einstellt.

14. Verfahren nach einem der Ansprüche 1 bis 13, dadurch gekennzeichnet, daß man den Wirbelzustand im Wirbelschichtreaktor - über die Kennzahlen von Froude und Archimedes definiert - entsprechend

$$1 \leq 3/4 \cdot F_r^2 \cdot \frac{\rho g}{\rho k - \rho g} \leq 20$$

bzw.

$$1 \leq Ar \leq 100$$

einstellt.

15. Verfahren nach einem der Ansprüche 1 bis 14, dadurch gekennzeichnet, daß man die Gasgeschwindigkeit im Wirbelschichtreaktor auf 1 bis 10 m/s (angegeben als Leerrohrgeschwindigkeit) einstellt.

16. Verfahren nach einem der Ansprüche 1 bis 15, dadurch gekennzeichnet, daß man die mittlere Suspensionsdichte im Wirbelschichtreaktor auf 0,2 bis 2 $kg/m^3$ einstellt.

17. Verfahren nach einem der Ansprüche 1 bis 16, dadurch gekennzeichnet, daß man aus der zirkulierenden Wirbelschicht einen Teilstrom beladenen Sorptionsmittels abzweigt und diesen bei einer Temperatur von 600 bis 1200°C, vorzugsweise 800 bis 1000°C, einer oxidierenden Behandlung unterwirft.

18. Verfahren nach einem der Ansprüche 1 bis 17, dadurch gekennzeichnet, daß man den überwiegenden Teil des oxidierend behandelten Sorptionsmittels in die zirkulierende Wirbelschicht zurückführt und daß man den restlichen, vornehmlich aus Kalziumsulfat bestehenden Teilstrom ausschleust, sowie daß man den ausgeschleusten Teilstrom durch frisches Sorptionsmittel, insbesondere Kalkstein, ersetzt.

19. Verfahren nach einem der Ansprüche 1 bis 18, dadurch gekennzeichnet, daß man die oxidierende Behandlung in einer Wirbelschicht, vorzugsweise in einer zirkulierenden Wirbelschicht, vornimmt.

20. Verfahren nach einem der Ansprüche 1 bis 19, dadurch gekennzeichnet, daß man die den $NO_x$-Abbau katalytisch fördernden Materialien einer Aktivierung durch mechanische und thermische Aufbereitung unterzieht.

## Claims

1. Method for the simultaneous removal of $NO_x$ and $SO_2$ from flue gases with the aid of solids in a circulating fluidised bed formed from a fluidised bed reactor, a separator and a recycling line, the flue gas being used as a fluidising gas and the fluidised bed consisting of solids of two differing grain ranges and of at least two different types, characterised in that ammonia or ammonia-containing or ammonia-producing substances are introduced into the stream of flue gas and the flue gases are treated at a temperature of 160 to 500°C, and that the coarser solids consist of materials which catalytically promote the decomposition of $NO_x$ and which have a grain size $d_p$ 50 of 50 to 1000 μm, and the finer solids consist of $SO_x$-absorbing materials having a grain size $d_p$ 50 of below 20 μm.

2. Method according to Claim 1, characterised in that in addition radical forming agents such as peroxides, and/or agents for activating the catalytically active materials are introduced into the stream of flue gas.

3. Method according to one of Claims 1 or 2, characterised in that the flue gases are treated at a temperature of 250 to 500°C.

4. Method according to one of Claims 1 to 3, characterised in that the usable heat which is still present after the removal of pollutants is removed from the stream of flue gas by means of heat exchangers.

5. Method according to Claim 4, characterised in that the stream of flue gas is cooled further in so doing by about the same temperature difference as that by which the dew-point has been reduced as a result of the removal of pollutants.

6. Method according to one of Claims 1 to 5, characterised in that the coarser solids have a grain size $d_p$ 50 of 100 to 500 μm.

7. Method according to one of Claims 1 to 6, characterised in that the coarser solids consist of transition metals of groups IV to VIII of the periodic table of the elements or oxides thereof.

8. Method according to Claim 7, characterised in that the coarser solids consist of a metal of the group Ti, V or Fe or oxides thereof.

9. Method according to one of Claims 1 to 6, characterised in that the coarser solids consist of Cu or oxides thereof.

10. Method according to one of Claims 1 to 9, characterised in that the finer solids consist of alkaline earth metal oxide, hydroxide or carbonate, in particular of $Ca(OH)_2$.

11. Method according to one of Claims 1 to 10, characterised in that waste products or byproducts are used as coarser and/or finer solids.

12. Method according to one of Claims 1 to 11, characterised in that preferably abrasion-resisting materials are used for the coarser solids.

13. Method according to one of Claims 1 to 12, characterised in that the proportion of coarse solids is set to above 50 % in the fluidised bed.

14. Method according to one of Claims 1 to 13, characterised in that the fluidised state in the fluidised bed reactor - as defined by the Froude and Archimedes numbers - is set according to

$$1 \leq 3/4 \cdot F_r^2 \cdot \frac{\rho g}{\rho k - \rho g} \leq 20$$

or

$$1 \leq Ar \leq 100$$

15. Method according to one of Claims 1 to 14, characterised in that the gas velocity in the fluidised bed reactor is set to 1 to 10 m/s (stated as empty pipe velocity).

16. Method according to one of Claims 1 to 15, characterised in that the average suspension density in the fluidised bed reactor is set to 0.2 to 2 $kg/m^3$.

17. Method according to one of Claims 1 to 16, characterised in that a partial stream of laden sorbent is diverted from the circulating fluidised bed and subjected to oxidising treatment at a temperature of 600 to 1200°C, preferably 800 to 1000°C.

18. Method according to one of Claims 1 to 17, characterised in that the predominant part of the sorbent which has been subjected to oxidising treatment is recycled into the circulating fluidised bed and that the remaining partial stream, which consists predominantly of calcium sulphate, is withdrawn, and that the partial stream which has been withdrawn is replaced by fresh sorbent, in particular limestone.

19. Method according to one of Claims 1 to 18, characterised in that the oxidising treatment is carried out in a fluidised bed, preferably in a circulating fluidised bed.

20. Method according to one of Claims 1 to 19, characterised in that the materials which catalytically promote the decomposition of NO$_x$ are subjected to activation by mechanical and thermal treatment.

**Revendications**

1. Procédé de séparation simultanée de NO$_x$ et de SO$_2$ de gaz brûlés à l'aide de matières solides, dans un lit fluidisé circulant formé d'un réacteur à lit fluidisé, d'un séparateur et d'un conduit de recyclage, le gaz brûlé étant utilisé comme gaz de fluidisation et le lit fluidisé étant constitué de matières solides de deux domaines granulométriques différents et d'au moins deux types différents, caractérisé en ce qu'il consiste à introduire, dans le courant de gaz brûlés, de l'ammoniac ou une substance contenant ou formant de l'ammoniac, et à traiter les gaz brûlés à une température de 160 à 500°C, la matière solide la plus grossière étant constituée de matériaux favorisant catalytiquement la décomposition de NO$_x$ et ayant une granulométrie de d$_p$ 50 comprise entre 50 et 100 µm, tandis que la matière solide fine est constituée de matériaux adsorbants SO$_x$ et ayant une granulométrie de d$_p$ 50 inférieure à 20 µm.

2. Procédé suivant la revendication 1, caractérisé en ce qu'il consiste à introduire en outre, dans le courant de gaz brûlés, des agents engendrant des radicaux comme des peroxydes et/ou des agents d'activation des matériaux à action catalytique.

3. Procédé suivant l'une des revendications 1 ou 2, caractérisé en ce qu'il consiste à traiter les gaz brûlés à une température de 250 à 500°C.

4. Procédé suivant l'une des revendications 1 à 3, caractérisé en ce qu'il consiste à soutirer du courant de gaz brûlés, au moyen d'échangeurs de chaleur, la chaleur utilisable encore présente après la séparation des substances polluantes.

5. Procédé suivant la revendication 4, caractérisé en ce qu'il consiste à refroidir davantage le courant de gaz brûlés, d'environ la même différence de température que l'abaissement du point de rosée dû à la séparation des substances polluantes.

6. Procédé suivant l'une des revendications 1 à 5, caractérisé en ce que la matière solide grossière a une granulométrie de d$_p$ 50 comprise entre 100 et 500 µm.

7. Procédé suivant l'une des revendications 1 à 6, caractérisé en ce que la matière solide grossière est constituée de métaux de transition des groupes IV à VIII de la classification périodique des éléments ou de leurs oxydes.

8. Procédé suivant la revendication 7, caractérisé en ce que la matière solide grossière est constituée d'un métal du groupe Ti, V, ou Fe ou leurs oxydes.

9. Procédé suivant l'une des revendications 1 à 6, caractérisé en ce que la matière solide grossière est constituée de Cu ou de ses oxydes.

10. Procédé suivant l'une des revendications 1 à 9, caractérisé en ce que la matière solide fine est constituée d'oxyde de métal alcalino-terreux, d'hydroxyde de métal alcalino-terreux ou de carbonate de métal alcalino-terreux, notamment de Ca(OH)$_2$.

11. Procédé suivant l'une des revendications 1 à 10, caractérisé en ce qu'il consiste à utiliser, comme matière solide et/ou fine, des déchets ou des sous-produits.

12. Procédé suivant l'une des revendications 1 à 11, caractérisé en ce qu'il consiste à utiliser, pour la matière solide grossière, de préférence des matériaux résistant à l'abrasion.

13. Procédé suivant l'une des revendications 1 à 12, caractérisé en ce qu'il consiste à régler, dans le lit fluidisé, la proportion de matière solide grossière à plus de 50 % en poids.

14. Procédé suivant l'une des revendications 1 à 13, caractérisé en ce qu'il consiste à régler l'état de fluidisation du réacteur à lit fluidisé, défini par les indices de Froude et d'Archimède, conformément à

$$1 \leq 3/4 \cdot F_r^2 \cdot \frac{\rho g}{\rho k - \rho g} \leq 20$$

$$1 \leq Ar \leq 100$$

15. Procédé suivant l'une des revendications 1 à 14, caractérisé en ce qu'il consiste à régler la vitesse des gaz dans le réacteur à lit fluidisé entre 1 et 10 m/s (exprimée par la vitesse en tuyau vide).

16. Procédé suivant l'une des revendication 1 à 15, caractérisé en ce qu'il consiste à régler la masse volumique moyenne de la suspension dans le réacteur à lit fluidisé entre 0,2 et 2 kg/m$^3$.

17. Procédé suivant l'une des revendications 1 à 16, caractérisé en ce qu'il consiste à dériver du lit fluidisé circulant un courant partiel chargé d'agent d'adsorption et à le soumettre à une température de 600 à 1200°C et, de préférence, de 800 à 1000°C, à un traitement oxydant.

18. Procédé suivant l'une des revendications 1 à 17, caractérisé en ce qu'il consiste à recycler la partie prépondérante de l'agent d'adsorption ayant subi un traitement oxydant au lit fluidisé circulant et à évacuer le courant partiel restant constitué principalement de sulfate de calcium, ainsi qu'à remplacer le courant partiel évacué par de l'agent d'adsorption frais, notamment par de la pierre à chaux.

19. Procédé suivant l'une des revendications 1 à 18, caractérisé en ce qu'il consiste à effectuer le traitement oxydant dans un lit fluidisé, de préférence dans un lit fluidisé circulant.

20. Procédé suivant l'une des revendications 1 à 19, caractérisé en ce qu'il consiste à soumettre les matériaux favorisant catalytiquement la décomposition de $NO_x$ à une activation par traitement mécanique et thermique.

Fig.1

EP 0 172 588 B1

Fig.2

EP 0 172 588 B1